# EUROPEAN PATENT APPLICATION

(11) **EP 4 617 986 A1**
(43) Date of publication of application: **17.09.2025**
(21) Application number: 25155925.8
(22) Date of filing: 05.02.2025
(51) Int. Cl.: G06Q 30/0241, B41J 3/407, G06F 3/12

(54) **PRINT SYSTEM, PRINT METHOD, AND PRINT PROGRAM**

(30) Priority: 13.03.2024 JP 2024038773
(71) Applicant: RISO KAGAKU CORPORATION, Tokyo 108-8385 (JP)
(72) Inventor: HIROSHIMA, Atsushi, Tokyo 108-8385 (JP)
(74) Representative: Winter, Brandl - Partnerschaft mbB

(57) **Abstract**

A print system includes: a printer; and a server connected to the printer via a network and configured to cause the printer to perform printing on a three-dimensional print medium. The server includes a controller configured to: store an advertisement table associating market information including at least product information with advertisement image data obtained by converting a three-dimensional image into two dimensions or store a learned model where data associating market information including at least product information with advertisement image data obtained by converting a three-dimensional image into two dimensions is learned as training data; extract, based on the stored advertisement table or the stored learned model, the advertisement image data corresponding to the market information relevant to transaction information of a purchased product; and process the extracted advertisement image data such that an advertisement image of the extracted advertisement image data appears three-dimensional from a prescribed virtual viewpoint according to a three-dimensional shape of the three-dimensional print medium with respect to at least two surfaces of the three-dimensional print medium where the purchased product is packaged.

## Description

### BACKGROUND

### 1. TECHNICAL FIELD

The present invention relates to a print system, a print method, and a print program.

### 2. RELATED ART

Generally, mail-order (including online shopping) is performed where products are ordered on an EC site or the like, and the products are packaged in packaging materials, such as a corrugated cardboard, and shipped to recipients. In addition to distribution information, such as products, manufacturers, and destinations of recipients, images of information, such as advertisements and communities corresponding to recipients, may be printed on packaging materials used in distribution channels of mail order, which are then shipped.

JP 2023-061049 A describes a system where a product advertisement specified on the basis of transaction data is printed on a packaging material for delivery to a recipient of a product ordered in electronic commerce. In particular, it is described that for products or the like to be advertised using outer surfaces of containers, advertisement images and product information images are printed on multiple outer surfaces.

### SUMMARY

By using the technology of JP 2023-061049 A to simply print advertisement images and product information images on multiple outer surfaces for products, or the like, to be advertised using the outer surfaces of containers, it is difficult to convey a three-dimensional feeling regarding products or stores, and an expected advertising effect cannot be obtained as when using conventional flat advertisements.

An object of the present invention is to provide a print system, a print method, and a print program of performing printing capable of giving a three-dimensional feeling.

A print system in accordance with the present invention includes: a printer; and a server connected to the printer via a network and configured to cause the printer to perform printing on a three-dimensional print medium. The server includes a controller configured to: store an advertisement table associating market information including at least product information with advertisement image data obtained by converting a three-dimensional image into two dimensions or store a learned model where data associating market information including at least product information with advertisement image data obtained by converting a three-dimensional image into two dimensions is learned as training data; extract, based on the stored advertisement table or the stored learned model, the advertisement image data corresponding to the market information relevant to transaction information of a purchased product; and process the extracted advertisement image data such that an advertisement image of the extracted advertisement image data appears three-dimensional from a prescribed virtual viewpoint according to a three-dimensional shape of the three-dimensional print medium with respect to at least two surfaces of the three-dimensional print medium where the purchased product is packaged.

According to the above-described configuration, it is possible to perform printing capable of giving a three-dimensional feeling. Thus, for example, it is possible to improve advertising and promotion effects.

### BRIEF DESCRIPTION OF DRAWINGS

FIG. 1 is a diagram illustrating a functional configuration of a print system according to the present embodiment.
FIG. 2 is a schematic configuration diagram illustrating a hardware configuration of a printer included in the print system according to the present embodiment.
FIG. 3 is a diagram illustrating an example of advertisement image data obtained by converting a three-dimensional image into two dimensions.
FIG. 4 is an image diagram illustrating an image of processing treatment by a processing unit included in a server of the print system according to the present embodiment.
FIGS. 5A and 5B are diagrams illustrating examples of a print medium on which the printer has performed printing on the basis of advertisement image data processed by the server of the print system according to the present embodiment.
FIG. 6A is a diagram illustrating an example of advertisement image data.
FIG. 6B is a diagram illustrating an example of a three-dimensional print medium where printing is to be performed.
FIG. 6C is a diagram illustrating a result of printing the advertisement image data illustrated in FIG. 6A on the print medium illustrated in FIG. 6B.
FIG. 7A is a diagram illustrating a state where the advertisement image data is printed on a second surface of the print medium.
FIG. 7B is a developed view of the second surface, where the advertisement image data is printed.
FIG. 8A is a diagram illustrating a state where the advertisement image data is printed on a first surface of the print medium.
FIG. 8B is a developed view of the first surface, where the advertisement image data is printed.
FIG. 9A is a diagram illustrating a state where the advertisement image data is printed on each surface of the print medium.
FIG. 9B is a developed view of the print medium, where the advertisement image data is printed.
FIG. 10 is a flowchart illustrating a process content in the print system according to the present embodiment.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically illustrated in order to simplify the drawing.

Description will be hereinbelow provided for embodiments of the present invention by referring to the drawings. It should be noted that the same or similar parts and components throughout the drawings will be denoted by the same or similar reference signs, and that descriptions for such parts and components will be omitted or simplified. In addition, it should be noted that the drawings are schematic and therefore different from the actual ones.

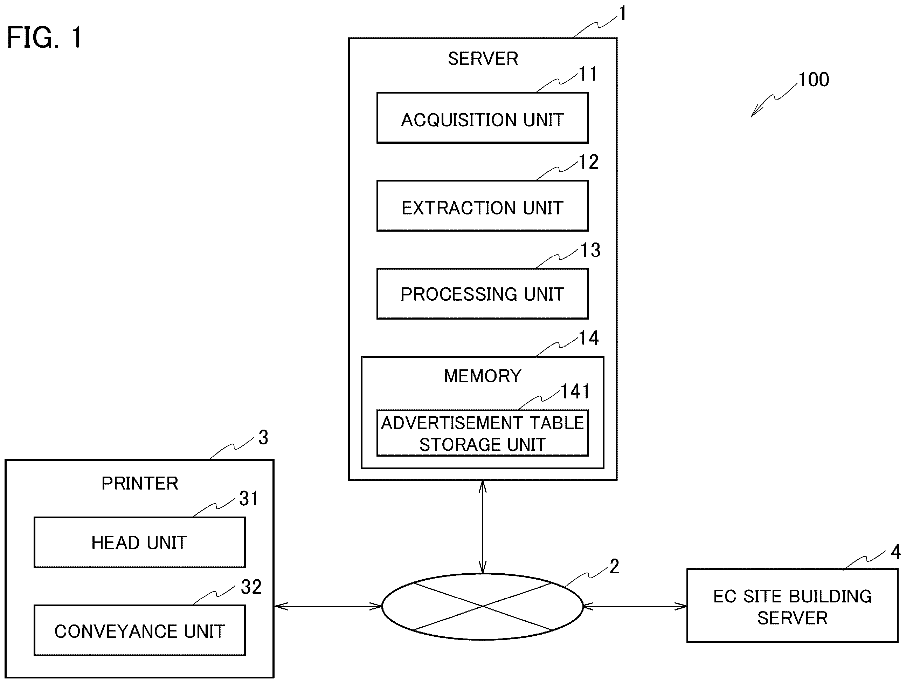

FIG. 1 is a diagram illustrating a functional configuration of a print system 100 according to the present embodiment.

As illustrated in FIG. 1, the print system 100 according to the present embodiment includes a server 1, a printer 3, and an EC site building server 4, which are connected to each other via a network 2.

The printer 3 is an inkjet printer that performs color printing on a three-dimensional print medium to be conveyed, by ejecting, for example, a total of four colors of ink, cyan (C), magenta (M), yellow (Y), and black (K), from inkjet heads on the basis of image data. Details will be described below.

The server 1 includes a computer provided with a controller including: a CPU for executing various processes on the basis of a program; and a memory. The server 1 generates advertisement image data to be printed by the printer 3 on a three-dimensional print medium.

The EC site building server 4 is a server that builds an EC (electronic commerce) site. The EC site building server 4 accepts a product purchase procedure from a user terminal, not illustrated, via the network 2 and performs payment processing. The EC site building server 4 accepts a purchase procedure of a product from a user terminal and when a transaction is concluded, transmits transaction information of the product, for which the transaction has been concluded (the product purchased), to the server 1 via the network 2. The EC site building server 4 may store transaction information in a database, not illustrated, and may transmit transaction information of a specified product to the server 1 in response to a request from the server 1. The EC site building server 4 may be a cloud server or the like.

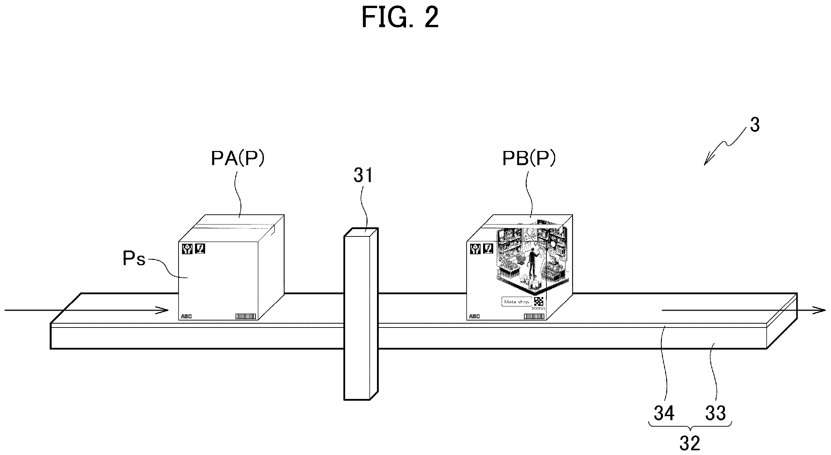

FIG. 2 is a schematic configuration diagram illustrating a hardware configuration of the printer 3 included in the print system 100 according to the present embodiment.

As illustrated in FIGS. 1 and 2, the printer 3 includes a head unit 31 and a conveyance unit 32.

The conveyance unit 32 conveys a print medium P in the direction of an arrow illustrated in FIG. 2. As the print medium P, a three-dimensional print medium (for example, a box, such as a corrugated cardboard box) is used which includes a print surface Ps standing in the vertical direction, illustrated in FIG. 2, for example. However, the print medium P is not limited to a hexahedral box, and may be any type that includes a print surface standing in the vertical direction, such as an octahedron or a hexagonal column.

The conveyance unit 32 includes a supporting platform 33 and a conveyance belt portion 34. The supporting platform 33 supports the conveyance belt portion 34.

Although not illustrated, the conveyance belt portion 34 includes: two platen rollers extending in a direction orthogonal to a direction where the print medium P is conveyed; and a conveyance belt. The two platen rollers are arranged in parallel, spaced apart with respect to the direction where the print medium P is conveyed. An annular conveyance belt is hung between the two platen rollers arranged in parallel. With this configuration, the platen rollers rotate, and the conveyance belt moves, thereby conveying the print medium P in the direction of the arrow.

The head unit 31 performs printing by ejecting ink onto the print surface Ps of the print medium P conveyed by the conveyance unit 32.

Although not illustrated, the head unit 31 includes four line heads for ejecting C (cyan), M (magenta), Y (yellow), and K (black) inks. The four line heads extend vertically and eject ink onto the print medium PA (P) conveyed by the conveyance unit 32. Thus, it is possible to obtain a printed print medium PB (P).

By changing the orientation of the print medium P on the conveyance unit 32, any surface of the hexahedron can be the print surface Ps.

Returning to FIG. 1, the server 1 includes an acquisition unit 11, an extraction unit 12, a processing unit 13, and a memory 14. The acquisition unit 11, the extraction unit 12, the processing unit 13, and an advertisement table storage unit 141 described below are configured by the server 1 controller CPU executing a program. The program may be stored in a memory of the controller, recorded on a recording medium, such as a magnetic disk, optical disk, or semiconductor memory, or provided to the server 1 via a network.

The memory 14 includes, for example, a solid state drive (SSD) or a hard disk drive (HDD), and includes the advertisement table storage unit 141.

The advertisement table storage unit 141 associates: market information including at least product information; advertisement image data obtained by converting a three-dimensional image into two dimensions; and advertisement request information; and stores them as an advertisement table. Note that the advertisement table need not include advertisement request information.

Here, the market information includes: product information specified as a destination of advertisement, such as a product name, a product code, a product genre, a manufacturer, and a price; target customer information (including demographic information, such as age, gender, income, and occupation, and psychographic information, such as lifestyle, hobbies, and preferences) for a product specified as a destination of advertisement; information on market size and competition of a product genre; sales channel information; and feedback information from customers.

Advertisement image data obtained by converting a three-dimensional image into two dimensions is, for example, data of an image obtained by representing a virtual space in two dimensions.

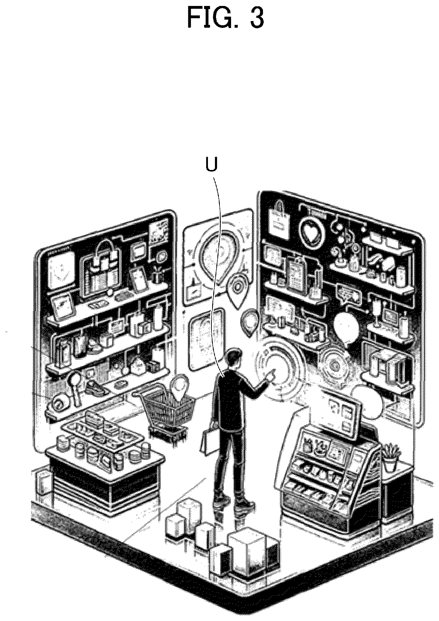

FIG. 3 illustrates an example of advertisement image data obtained by converting a three-dimensional image into two dimensions.

The advertisement image data is, for example, an isometric view or bird's eye view representing a virtual space (metaverse space) as illustrated in FIG. 3.

In the example illustrated here, a user U enters a community in a virtual space (metaverse space) through an avatar, browses products in the community, and makes a purchase using a shopping function.

Here, community refers to a group gathered for a specific purpose, such as the same product genre (craft/handmade products, specific local products, etc.), or an economic zone community (small businesses, trade associations, etc.), or its platform. Within the community, it becomes possible for users to talk and exchange information, display products, prototypes, and examples of use of products, and actually make a purchase using a shopping function.

If the image of the community in the metaverse space can be more accurately conveyed to a user by printing such an image, on the basis of the advertisement image data, on a three-dimensional print medium, such as a corrugated cardboard box where a product is packaged, it is possible to pique the interest of the user.

The advertisement request information is information where conditions for printing the advertisement image data are defined, and includes, for example, a period of advertisement, quantity, and amount of advertisement.

The acquisition unit 11 acquires transaction information of a purchased product transmitted from the EC site building server 4.

Here, the transaction information includes product information specified as a destination of advertisement, such as a product name, a product code, a product genre, a manufacturer, and a price of a purchased product in the EC site building server 4, customer attribute information of a customer who made the purchase, purchase date and time, and purchase amount. In addition to the name of the customer, who made the purchase, the customer attribute information may include demographic information, such as age, gender, income, and occupation of the customer, and psychographic information, such as lifestyle, hobbies, and preferences.

Based on the advertisement table stored in the advertisement table storage unit 141, the extraction unit 12 extracts advertisement image data corresponding to market information relevant to the transaction information acquired by the acquisition unit 11.

For example, if the transaction information includes a product genre "shoes", and the customer attribute information includes information such as age "30's" and gender "male", the extraction unit 12 extracts advertisement image data corresponding to these product genre, age, and gender. At this time, if multiple pieces of advertisement image data are applicable, priority may be set for advertisement request information in advance, and a piece of advertisement image data may be extracted on the basis of the priority. For example, if the advertisement amount in the advertisement request information is set as an item with the highest priority, the advertisement image data having the highest advertisement amount may be extracted from the corresponding multiple pieces of advertisement image data.

The advertisement table storage unit 141 may store a learned model where data that associates: market information including at least product information; advertisement image data obtained by converting a three-dimensional image into two dimensions; and advertisement request information is learned as training data. Note that data to be learned as training data need not include advertisement request information. Based on the learned model, the extraction unit 12 may use transaction information acquired by the acquisition unit 11 as an input, specify market information with high relevance, and output advertisement image data corresponding to the relevant market information. According to market information, transaction information, feedback information after transactions, or the like, items to be learned by the learned model, and the degree of relevance may be updated as necessary. The updated learned model may be used for the next and subsequent transactions.

The processing unit 13 processes the advertisement image data, which has been extracted by the extraction unit 12, for at least two surfaces of the print medium P, in such a manner that the advertisement image appears three-dimensional from a prescribed virtual viewpoint, according to the three-dimensional shape of the print medium.

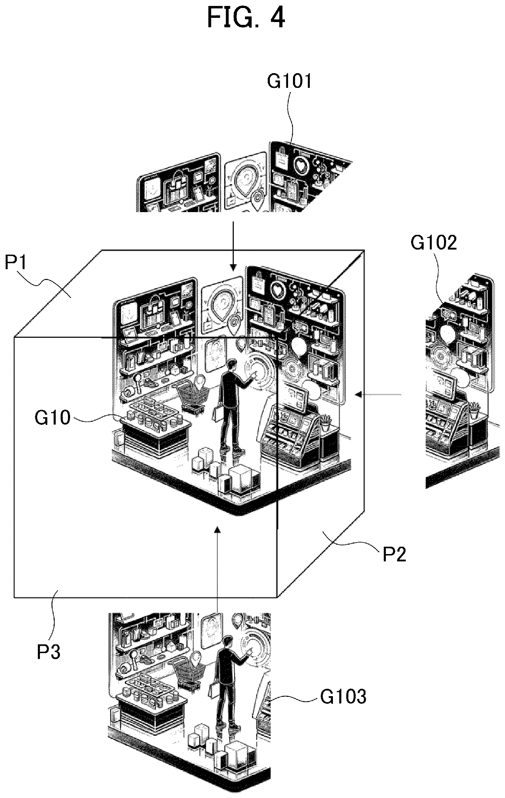

FIG. 4 is an image diagram illustrating an image of processing treatment by the processing unit 13 included in the server 1 of the print system 100 according to the present embodiment.

FIG. 4 illustrates an example of processing the advertisement image data to print on three surfaces among six surfaces of the print medium P, namely, a first surface P1, a second surface P2, and a third surface P3.

Since the print medium P is a cube, in order to perform printing on three surfaces, the first surface P1, the second surface P2, and the third surface P3, the processing unit 13 divides an advertisement image G10 into an advertisement image G101 for printing on the first surface P1, an advertisement image G102 for printing on the second surface P2, and an advertisement image G103 for printing on the third surface P3. The processing unit 13 deforms the advertisement images G101 to G103 in such a manner that the advertisement image G10 appears three-dimensional from a virtual viewpoint according to the cube shape. Processing treatment relevant to this deformation will be described below.

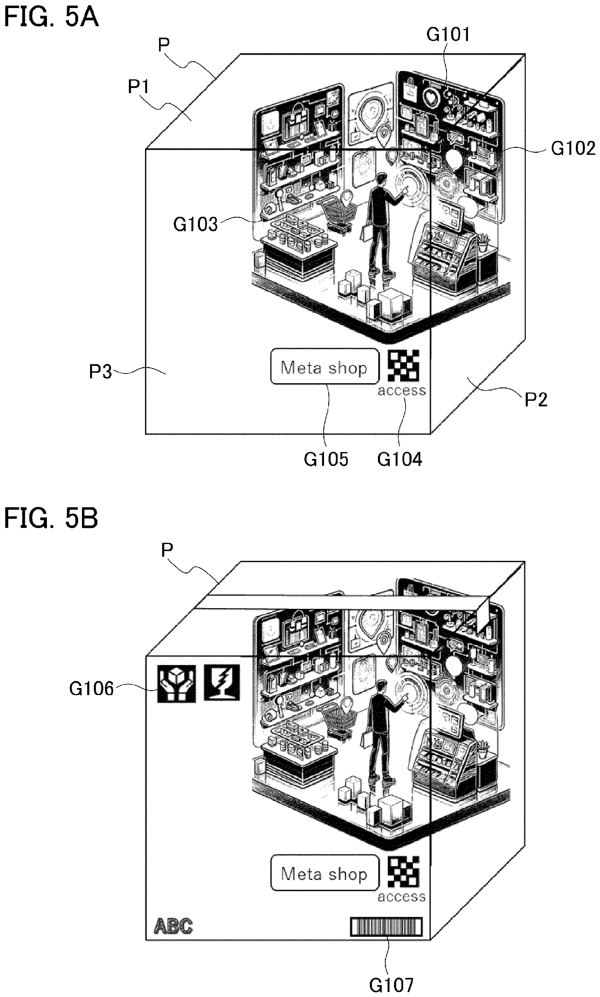

FIGS. 5A and 5B are diagrams illustrating examples of the print medium P where the printer 3 has performed printing on the basis of the advertisement image data processed by the server 1 of the print system 100 according to the present embodiment.

As illustrated in FIG. 5A, the advertisement image G101 is printed on the first surface P1, the advertisement image G102 is printed on the second surface P2, and the advertisement image G103 is printed on the third surface P3.

The processing unit 13 may divide and deform the advertisement image G10 into the advertisement image G101 for printing on the first surface P1, the advertisement image G102 for printing on the second surface P2, and the advertisement image G103 for printing on the third surface P3, and may add an advertisement image G104 for printing on the third surface P3.

The advertisement image G104 is a guide image for guiding to a store in a virtual space, and may be, for example, a two-dimensional coded image of a URL for guiding to the virtual space indicated by the advertisement image G10. Thus, a user who has viewed the print medium P can scan the advertisement image G104 from a mobile terminal or the like and read the URL, thereby allowing his/her avatar to enter the virtual space indicated by the advertisement image G10. The advertisement image G104 may be, for example, a two-dimensional coded image of a URL for guiding to a web site for selling in the virtual space indicated by the advertisement image G10. Thus, a user who has viewed the print medium P can scan the advertisement image G104 from a mobile terminal or the like and read the URL, thereby connecting to a web site for selling in the virtual space indicated by the advertisement image G10.

The processing unit 13 may add an advertisement image G105 where a keyword, such as an advertising company name or a community name, is printed as a guide image for guiding to a store in the virtual space.

As illustrated in FIG. 5B, the processing unit 13 may add an additional image G106 indicating a caution mark necessary for distribution, and an additional image G107 indicating a distribution code. In this case, the images are added in such a manner that distribution information printed using flexographic printing or the like is avoided.

Other images and wording may be added to the advertisement image G10 in addition to advertisement image data for a request stored in the advertisement table. For example, an image of a purchased product may be printed in addition to the advertisement image data. The image of the purchased product is printed, and it may be printed that the product is available for special use in the community in the virtual space (metaverse space) in order to attract more interest of the purchaser.

The controller of the server 1 may control (output an instruction to the EC site building server 4) the EC site building server 4 to display in the virtual space a virtual product identical to the purchased product to enable the product to be used in the virtual space. Specifically, a user scans the advertisement image G104 from a mobile terminal or the like, reads a URL, connects to a web site for selling in the virtual space indicated by the advertisement image G10, and purchases a product on the connected web site. Then, when the user enters the virtual space indicated by the advertisement image G10 from the web site where the user has purchased the product, the controller of the server 1 controls (outputs instruction to the EC site building server 4) the EC site building server 4 that displays the purchased product in the virtual space.

### <Processing Treatment>

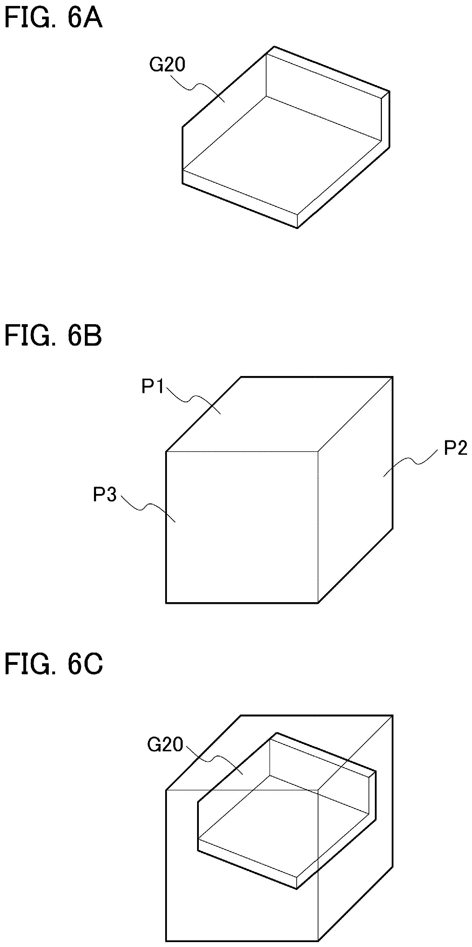

FIGS. 6A to 9B are explanatory diagrams explaining processing treatment by the processing unit 13 included in the server 1 of the print system 100 according to the present embodiment.

FIG. 6A is a diagram illustrating an example of advertisement image data. FIG. 6B is a diagram illustrating an example of the three-dimensional print medium P for printing. FIG. 6C is a diagram illustrating a result of printing the advertisement image data illustrated in FIG. 6A on the print medium P illustrated in FIG. 6B.

As illustrated in FIG. 6A, the advertisement image data G20 is image data obtained by converting a three-dimensional image of a structure having a three-dimensional structure into two dimensions.

The advertisement image data G20 is divided to be printed on three surfaces, the first surface P1, the second surface P2, and the third surface P3, of the print medium P illustrated in FIG. 6B.

Since the print medium P has a three-dimensional shape, when the three-dimensional shape is viewed from a prescribed virtual viewpoint, the distances from the virtual viewpoint to prescribed positions on the image are not constant. The distances also differ greatly depending on angles of straight lines connecting the virtual viewpoint and the prescribed positions on the image with respect to the first surface P1, the second surface P2, and the third surface P3 for printing. Here, the prescribed virtual viewpoint is a given point where the first surface P1, the second surface P2, and the third surface P3 can be seen.

Thus, an image to be printed on the first surface P1, the second surface P2, and the third surface P3 is processed in consideration of the angle between: a straight line connecting the virtual viewpoint and a prescribed point on a surface of the three-dimensional shape; and the surface of the three-dimensional shape, and thus it is possible to perform printing in consideration of the depth of the three-dimensional shape in such a manner that the advertisement image data G20 looks three-dimensional as illustrated in FIG. 6C.

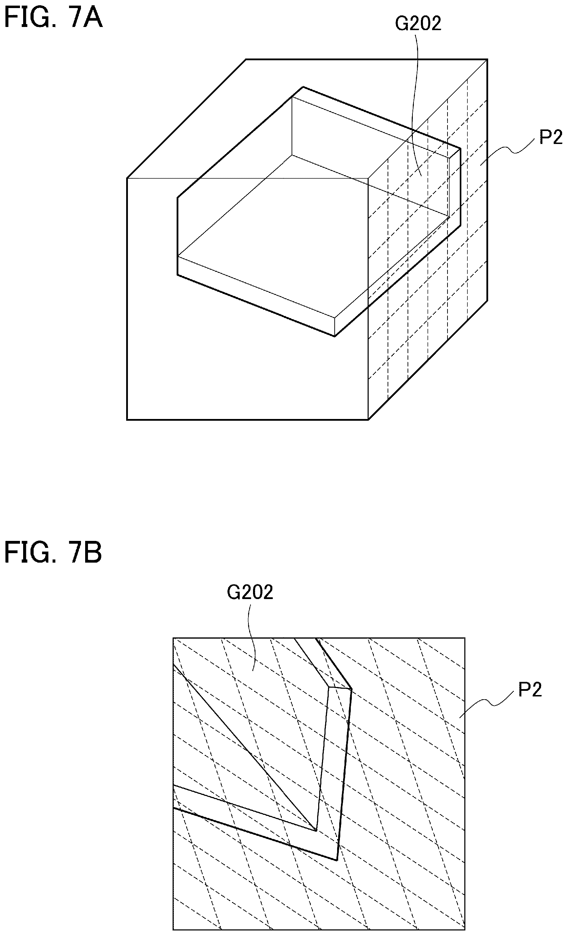

FIG. 7A is a diagram illustrating a state where the advertisement image data G202 is printed on the second surface P2 of the print medium P. FIG. 7B is a developed view of the second surface P2, where the advertisement image data G202 is printed.

As illustrated in FIG. 7A, when the three-dimensional shape is viewed from the virtual viewpoint, which is a given point where the first surface P1, the second surface P2, and the third surface P3 can be seen, angles of straight lines connecting the virtual viewpoint and prescribed positions on the second surface P2 with respect to the second surface P2 are different from each other.

Thus, as illustrated in FIG. 7B, the processing unit 13 distorts the advertisement image data G202 to be printed on the print medium P, in such a manner that the advertisement image appears three-dimensional from the prescribed virtual viewpoint, according to the angles of the straight lines connecting the virtual viewpoint and the prescribed positions on the second surface P2 with respect to the second surface P2.

In the example illustrated in FIG. 7B, the advertisement image data G202 is deformed to be oblique to the lower right with a side (left vertical side) taken as a reference. Here, in the deformation method, positions of pixels are converted by multiplying each pixel by a transformation matrix (rotation, scale matrix) corresponding to an angle of a straight line connecting the virtual viewpoint and a position of each pixel on the second surface P2 with respect to the second surface P2.

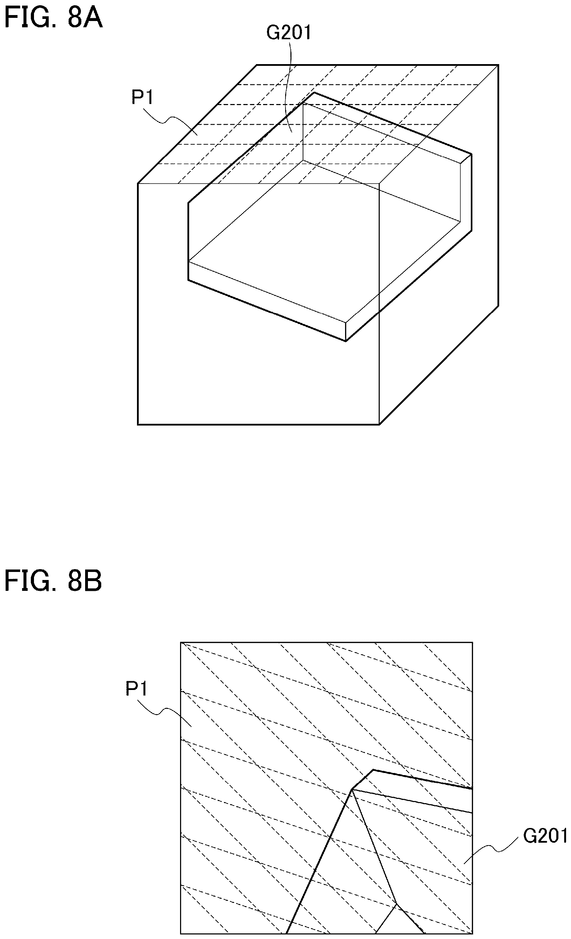

FIG. 8A is a diagram illustrating a state where the advertisement image data G201 is printed on the first surface P1 of the print medium P. FIG. 8B is a developed view of the first surface P1, where the advertisement image data G201 is printed.

As illustrated in FIG. 8A, when the three-dimensional shape is viewed from the virtual viewpoint, which is a given point where the first surface P1, the second surface P2, and the third surface P3 can be seen, angles of straight lines connecting the virtual viewpoint and prescribed positions on the first surface P1 with respect to the first surface P1 are different from each other.

Thus, as illustrated in FIG. 8B, the processing unit 13 distorts the advertisement image data G201 to be printed on the print medium P, in such a manner that the advertisement image appears three-dimensional from the prescribed virtual viewpoint, according to the angles of the straight lines connecting the virtual viewpoint and the prescribed positions on the first surface P1 with respect to the first surface P1.

In the example illustrated in FIG. 8B, the advertisement image data G201 is deformed to be oblique to the upper left with a side (lower lateral side) taken as a reference.

Although explanations will be omitted, the same applies to the advertisement image data printed on the third surface P3 of the print medium P, and the processing unit 13 distorts the advertisement image data to be printed on the print medium P, in such a manner that the advertisement image appears three-dimensional from the prescribed virtual viewpoint, according to the angles of the straight lines connecting the virtual viewpoint and prescribed positions on the third surface P3 with respect to the third surface P3.

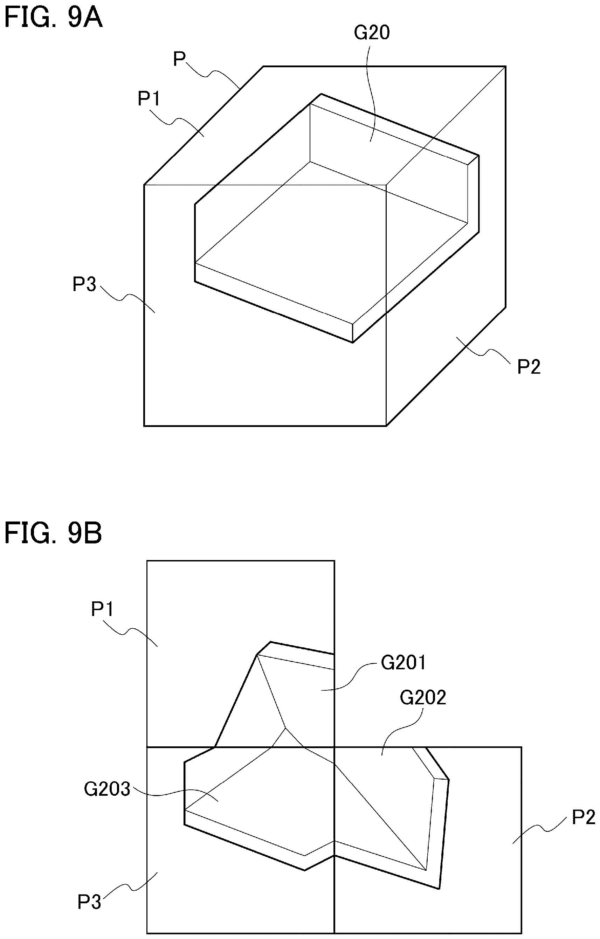

FIG. 9A is a diagram illustrating a state where the advertisement image data G20 is printed on each surface of the print medium P. FIG. 9B is a developed view of the print medium P, where the advertisement image data G20 is printed.

As illustrated in FIG. 9B, the advertisement image G201, which has been processed by the processing unit 13, is printed on the first surface P1 of the print medium P; the advertisement image G202, which has been processed by the processing unit 13, is printed on the second surface P2, and the advertisement image G203, which has been processed by the processing unit 13, is printed on the third surface P3.

In this way, the processing unit 13 processes the advertisement image data G20 for the first surface P1 to the third surface P3 of the print medium P in such a manner that the advertisement image appears three-dimensional from a prescribed virtual viewpoint, according to the three-dimensional shape of the print medium P. Then, the advertisement image data G20 is printed on a three-dimensional print medium, such as a corrugated cardboard box, in which a product is packaged. Thus, it is possible to perform printing capable of causing a user to visually recognize the printed advertisement image data G20 in three dimensions, that is, giving the user a three-dimensional feeling. Therefore, it is possible to improve advertising and promotion effects, for example. When the advertisement image data G20 is an image of a virtual space (metaverse space), it is possible to more accurately convey the image of a community in the metaverse space to a user by giving the user a three-dimensional feeling. Therefore, it is possible to more effectively interest the user, for example.

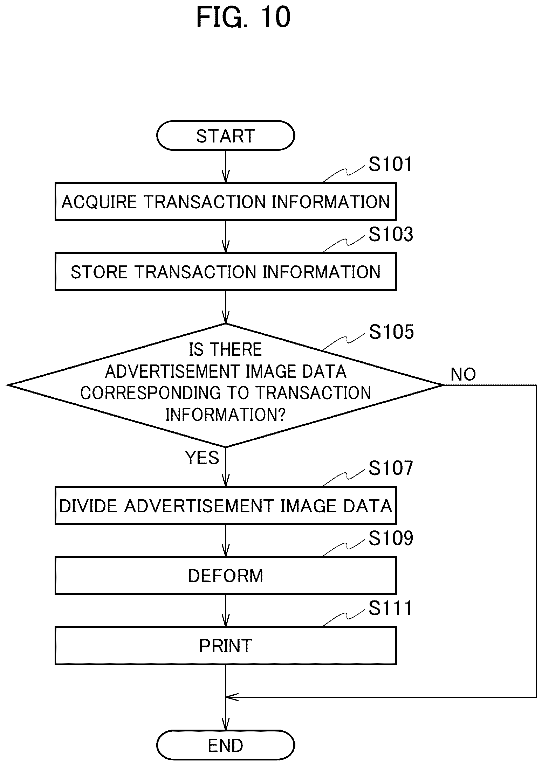

FIG. 10 is a flowchart illustrating a process content in the print system 100 according to the present embodiment.

As illustrated in FIG. 10, in step S101, the acquisition unit 11 of the server 1 acquires transaction information of a purchased product, transmitted from the EC site building server 4.

In step S103, the acquisition unit 11 stores the acquired transaction information in the memory 14.

In step S105, the extraction unit 12 determines, on the basis of an advertisement table stored in the advertisement table storage unit 141, whether there is advertisement image data corresponding to market information relevant to the transaction information acquired by the acquisition unit 11.

If it is determined that there is no advertisement image data (step S105; NO), the process ends. If it is determined that there is advertisement image data (step S105; YES), in step S107, the processing unit 13 divides extracted advertisement image data, according to the three-dimensional shape of the print medium P.

In step S109, the processing unit 13 deforms the divided advertisement image data in such a manner that the advertisement image appears three-dimensional from a prescribed virtual viewpoint, according to the three-dimensional shape of the print medium P. The controller of the server 1 outputs the advertisement image data processed by the processing unit 13 to the printer 3.

In step S111, the printer 3 performs color printing on the three-dimensional print medium P to be conveyed, by ejecting a total of four colors of ink, cyan (C), magenta (M), yellow (Y), and black (K), from inkjet heads on the basis of the advertisement image data processed by the processing unit 13. In step S111, the printer 3 may perform black and white printing.

The present application has, for example, a structure described below.

### (Appendix 1)

A print system in accordance with an embodiment includes: a printer; and a server connected to the printer via a network and configured to cause the printer to perform printing on a three-dimensional print medium. The server includes a controller configured to: store an advertisement table associating market information including at least product information with advertisement image data obtained by converting a three-dimensional image into two dimensions; extract, based on the stored advertisement table, the advertisement image data corresponding to the market information relevant to transaction information of a purchased product; and process the extracted advertisement image data such that an advertisement image of the extracted advertisement image data appears three-dimensional from a prescribed virtual viewpoint according to a three-dimensional shape of the three-dimensional print medium with respect to at least two surfaces of the three-dimensional print medium where the purchased product is packaged.

Thus, it is possible to perform printing capable of causing a user to visually recognize the printed advertisement image data in three dimensions, that is, giving the user a three-dimensional feeling. Therefore, it is possible to improve the advertising and promotion effects, for example.

### (Appendix 2)

In the print system according to Appendix 1, the controller may be configured to process the extracted advertisement image data by distorting the advertisement image to be printed on the three-dimensional print medium (P) based on an angle of a straight line connecting the prescribed virtual viewpoint and a prescribed position on the a surface of the three-dimensional shape with respect to the surface of the three-dimensional shape such that the advertisement image appears three-dimensional from the prescribed virtual viewpoint according to the three-dimensional shape of the three-dimensional print medium (P).

Thus, it is possible to cause a user to visually recognize the advertisement image data in a more three dimensional way.

### (Appendix 3)

In the print system according to Appendix 1, the three-dimensional image may be an image of a community built in a virtual space, and the controller may be configured to process the extracted advertisement image data to print on the three-dimensional print medium a guide image for guide to the community in the virtual space.

Thus, since the advertisement image data is an image of the community in the virtual space (metaverse space), it is possible to more accurately convey the image of the community in the metaverse space to the user by giving the user a three-dimensional feeling. Therefore, it is possible to more effectively pique the interest of the user, for example.

### (Appendix 4)

In the print system according to Appendix 1, the controller may be configured to perform controlling to display in the virtual space a virtual product identical to the purchased product to enable the purchased product to be used in the virtual space.

Thus, it is possible for the user to use the purchased product in the virtual space through his/her avatar, for example. Therefore, for example, it is possible to promote willingness of the user to purchase a product, thereby improving the advertising and promotion effects.

### (Appendix 5)

A print system in accordance with an embodiment includes: a printer; and a server connected to the printer via a network and configured to cause the printer to perform printing on a three-dimensional print medium. The server includes a controller configured to: store a learned model where data associating market information including at least product information with advertisement image data obtained by converting a three-dimensional image into two dimensions is learned as training data; extract, based on the stored learned model, the advertisement image data corresponding to the market information relevant to transaction information of a purchased product; and process the extracted advertisement image data such that an advertisement image of the extracted advertisement image data appears three-dimensional from a prescribed virtual viewpoint according to a three-dimensional shape of the three-dimensional print medium with respect to at least two surfaces of the three-dimensional print medium where the purchased product is packaged.

Thus, it is possible to perform printing capable of causing a user to visually recognize the printed advertisement image data in three dimensions, that is, giving the user a three-dimensional feeling. Therefore, for example, it is possible to improve the advertising and promotion effects, and to present an advertisement image having a higher advertising and promotion effects to the user. Since the advertisement image data is extracted using a learned model, the effect (accuracy) of association is high, and the advertisement image data to be extracted can be changed at any time. Even if input information is not in the advertisement table, it is possible to extract appropriate advertisement image data according to input transaction information of a purchased product. Since any piece of advertisement image data can be extracted, it is not necessary to set the priority of advertisement request information in advance, as in the advertisement table.

### (Appendix 6)

A print method in accordance with an embodiment is a print method in a print system including a printer and a server connected to the printer via a network and configured to cause the printer to perform printing on a three-dimensional print medium. The method includes: storing an advertisement table associating market information including at least product information with advertisement image data obtained by converting a three-dimensional image into two dimensions or store a learned model where data associating market information including at least product information with advertisement image data obtained by converting a three-dimensional image into two dimensions is learned as training data; extracting, based on the stored advertisement table or the stored learned model, the advertisement image data corresponding to the market information relevant to transaction information of a purchased product; and processing the extracted advertisement image data such that an advertisement image of the extracted advertisement image data appears three-dimensional from a prescribed virtual viewpoint according to a three-dimensional shape of the three-dimensional print medium with respect to at least two surfaces of the three-dimensional print medium (P) where the purchased product is packaged.

Thus, it is possible to perform printing capable of causing a user to visually recognize the printed advertisement image data in three dimensions, that is, giving the user a three-dimensional feeling. Therefore, it is possible to improve the advertising and promotion effects, for example.

### (Appendix 7)

A print program in accordance with an embodiment is a print program for a print system including a printer and a server connected to the printer via a network and configured to cause the printer to perform printing on a three-dimensional print medium. The print program causes the print system to execute: storing an advertisement table associating market information including at least product information with advertisement image data obtained by converting a three-dimensional image into two dimensions or store a learned model where data associating market information including at least product information with advertisement image data obtained by converting a three-dimensional image into two dimensions is learned as training data; extracting, based on the stored advertisement table or the stored learned model, the advertisement image data corresponding to the market information relevant to transaction information of a purchased product; and processing the extracted advertisement image data such that an advertisement image of the extracted advertisement image data appears three-dimensional from a prescribed virtual viewpoint according to a three-dimensional shape of the three-dimensional print medium with respect to at least two surfaces of the three-dimensional print medium where the purchased product is packaged.

Thus, it is possible to perform printing capable of causing a user to visually recognize the printed advertisement image data in three dimensions, that is, giving the user a three-dimensional feeling. Therefore, it is possible to improve the advertising and promotion effects, for example.

Further, the features of all embodiments and all claims can be combined with each other as long as they do not contradict each other.

## Claims

1. A print system (100) comprising:
a printer (3); and
a server (1) connected to the printer (3) via a network (2) and configured to cause the printer (3) to perform printing on a three-dimensional print medium (P), wherein
the server (1) includes a controller configured to:
store an advertisement table associating market information including at least product information with advertisement image data obtained by converting a three-dimensional image into two dimensions or store a learned model where data associating market information including at least product information with advertisement image data obtained by converting a three-dimensional image into two dimensions is learned as training data;
extract, based on the stored advertisement table or the stored learned model, the advertisement image data corresponding to the market information relevant to transaction information of a purchased product; and
process the extracted advertisement image data such that an advertisement image of the extracted advertisement image data appears three-dimensional from a prescribed virtual viewpoint according to a three-dimensional shape of the three-dimensional print medium (P) with respect to at least two surfaces of the three-dimensional print medium (P) where the purchased product is packaged.

2. The print system (100) according to claim 1, wherein the controller is configured to process the extracted advertisement image data by distorting the advertisement image to be printed on the three-dimensional print medium (P) based on an angle of a straight line connecting the prescribed virtual viewpoint and a prescribed position on the a surface of the three-dimensional shape with respect to the surface of the three-dimensional shape such that the advertisement image appears three-dimensional from the prescribed virtual viewpoint according to the three-dimensional shape of the three-dimensional print medium (P).

3. The print system (100) according to claim 1, wherein
the three-dimensional image is an image of a community built in a virtual space, and
the controller is configured to process the extracted advertisement image data to print on the three-dimensional print medium (P) a guide image for guide to the community in the virtual space.

4. The print system (100) according to claim 1 wherein, the controller is configured to perform controlling to display in the virtual space a virtual product identical to the purchased product to enable the purchased product to be used in the virtual space.

5. A print method in a print system (100) comprising a printer (3) and a server (1) connected to the printer (3) via a network (2) and configured to cause the printer (3) to perform printing on a three-dimensional print medium (P), the method comprising:
storing an advertisement table associating market information including at least product information with advertisement image data obtained by converting a three-dimensional image into two dimensions or store a learned model where data associating market information including at least product information with advertisement image data obtained by converting a three-dimensional image into two dimensions is learned as training data;
extracting, based on the stored advertisement table or the stored learned model, the advertisement image data corresponding to the market information relevant to transaction information of a purchased product; and
processing the extracted advertisement image data such that an advertisement image of the extracted advertisement image data appears three-dimensional from a prescribed virtual viewpoint according to a three-dimensional shape of the three-dimensional print medium (P) with respect to at least two surfaces of the three-dimensional print medium (P) where the purchased product is packaged.

6. A print program for a print system (100) comprising a printer (3) and a server (1) connected to the printer (3) via a network (2) and configured to cause the printer (3) to perform printing on a three-dimensional print medium (P), the print program causing the print system (100) to execute:
storing an advertisement table associating market information including at least product information with advertisement image data obtained by converting a three-dimensional image into two dimensions or store a learned model where data associating market information including at least product information with advertisement image data obtained by converting a three-dimensional image into two dimensions is learned as training data;
extracting, based on the stored advertisement table or the stored learned model, the advertisement image data corresponding to the market information relevant to transaction information of a purchased product; and
processing the extracted advertisement image data such that an advertisement image of the extracted advertisement image data appears three-dimensional from a prescribed virtual viewpoint according to a three-dimensional shape of the three-dimensional print medium (P) with respect to at least two surfaces of the three-dimensional print medium (P) where the purchased product is packaged.
